# EUROPEAN PATENT APPLICATION

(11) **EP 4 383 946 A1**
(43) Date of publication of application: **12.06.2024**
(21) Application number: 23214186.1
(22) Date of filing: 05.12.2023
(51) Int. Cl.: H05B 6/06

(54) **COOKING APPLIANCE**

(30) Priority: 06.12.2022 KR 20220168472
(71) Applicant: LG Electronics Inc., Yeongdeungpo-gu Seoul 07336 (KR)
(72) Inventor: OK, Seungbok, Seoul 08592 (KR); KIM, Seongjun, Seoul 08592 (KR); JEON, Seonho, Seoul 08592 (KR)
(74) Representative: Vossius & Partner Patentanwälte Rechtsanwälte mbB

(57) **Abstract**

Provided is a cooking appliance. The cooking appliance includes an upper plate on which an object to be heated is disposed, a working coil configured to generate magnetic fields for heating the object to be heated, a temperature sensor configured to sense a temperature of the upper plate, a sub temperature sensor configured to sense a temperature of the upper plate, and a sensor support provided with a main mounting portion, on which the main temperature sensor is mounted, and a sub mounting portion, on which the sub temperature sensor is mounted. The sensor support is disposed to be elongated outward from a center of the working coil.

## Description

### CROSS-REFERENCE TO RELATED APPLICATIONS

The present application claims priority to Korean Patent Application No. 10-2022-0168472 (filed on December 6, 2022) .

### BACKGROUND

The present disclosure relates to a cooking appliance. More specifically, the present disclosure relates to a cooking appliance that heats food using an induction heating method.

Various types of cooking equipment are used to heat food at home or in a restaurant. Conventionally, gas stoves using gas as fuel have been widely used, but recently devices for heating an object to be heated, for example, cooking vessels such as pots, have been spread using electricity instead of gas.

A method of heating an object to be heated using electricity is largely divided into a resistance heating method and an induction heating method. The electric resistance method is a method of heating an object to be heated by transferring heat generated when an electric current flows through a metal resistance wire or a non-metallic heating element such as silicon carbide to the object to be heated (for example, a cooking vessel) through radiation or conduction. In addition, when high-frequency power of a predetermined size is applied to the coil, the induction heating method generates an eddy current in the object to be heated consisting of a metal component using a magnetic field generated around the coil to heat the object to be heated itself.

Recently, most of the induction heating methods are applied to cooking appliances.

In the case of such an induction heating-type cooking appliance, magnetic fields are not uniformly distributed, and thus, there may be an area on which the magnetic fields are strongly concentrated and an area on which the magnetic fields are weakly reached on an upper plate on which the object to be heated is disposed. Thus, before the cooking appliance performs a sufficient heating operation, the temperature distribution of the object to be heated may also be non-uniform.

The cooking appliance according to the related art is provided with a temperature sensor at a center of a heating zone for estimating the temperature of the object to be heated. The temperature sensor is being used to estimate the temperature of the object to be heated by sensing the heat transferred from the object to be heated to an upper plate. However, depending on a material of the object to be heated, a type or amount of food, etc., heat may be conducted slowly from the object to be heated to the temperature sensor disposed at a center of the heating zone. In this case, a response speed of the temperature sensor slows down to lead to a secondary limitation in which various functions using the sensed temperature do not operate properly.

Thus, in the related art, a method such as using a separate temperature sensor as an accessory have been proposed. In Korea Patent Publication No. 10-2021-0095491, a second temperature sensor senses a temperature of air flowing in a space between an upper plate and a working coil, but there is still a limitation in reaction speed.

### SUMMARY

Embodiments provide a cooking appliance provided with a temperature sensor and a sub temperature sensor to improve a reaction time.

Embodiments also provide a cooking appliance in which not only a main temperature sensor but also a sub temperature sensor are closely attached to an upper plate to improve a temperature sensing response speed.

A cooking appliance may include the sensor supporter on which the sub temperature sensor is mounted in an outward direction from a center of a working coil to quickly sense a temperature of a heating zone over a large area.

A cooking appliance may include a main temperature sensor and a sub temperature sensor, which are closely attached to a bottom surface of an upper plate to sense a temperature, thereby reducing a reaction time for the temperature sensing.

In one embodiment, a cooking appliance includes: an upper plate on which an object to be heated is disposed; a working coil configured to generate magnetic fields for heating the object to be heated; a temperature sensor configured to sense a temperature of the upper plate; a sub temperature sensor configured to sense a temperature of the upper plate; and a sensor support provided with a main mounting portion, on which the main temperature sensor is mounted, and a sub mounting portion, on which the sub temperature sensor is mounted, wherein the sensor support is disposed to be elongated outward from a center of the working coil.

The main mounting portion may be disposed at the center of the working coil, and the sub mounting portion may be disposed above the working coil.

The sub mounting portion may be disposed between the main mounting portion and an outer circumference of the working coil.

The sub temperature sensor may be provided in plurality, and a plurality of sensor spaces, in which the plurality of sub temperature sensors are disposed, may be defined in the sub mounting portion.

Each of the plurality of sensor spaces may have a different spaced distance from the main mounting portion.

The plurality of sensor spaces may be disposed in a straight line.

A harness space, in which a harness connected to the sub temperature sensor is disposed, may be defined in the sub mounting portion.

The harness space may have a bent portion that is bent at least one time.

The bent portion may be bent convexly in a direction of the center of the working coil.

Thermal grease may be filled into the sensor spaces.

The details of one or more embodiments are set forth in the accompanying drawings and the description below. Other features will be apparent from the description and drawings, and from the claims.

### BRIEF DESCRIPTION OF THE DRAWINGS

FIG. 1 is a perspective view illustrating a cooking appliance and a cooking container according to an embodiment of the present disclosure.
FIG. 2 is a cross-sectional view illustrating the cooking appliance and the cooking container according to an embodiment of the present disclosure.
FIG. 3 is a circuit diagram of a cooktop according to an embodiment of the present disclosure.
FIG. 4 is a view illustrating output characteristics of the cooktop according to an embodiment of the present disclosure.
FIG. 5 is a view illustrating a current density of a bottom of the cooking container that is being heated by the cooking appliance according to an embodiment of the present disclosure.
FIG. 6 is a control block diagram of the cooking appliance according to an embodiment of the present disclosure.
FIG. 7 is a view illustrating a sensor supporter, on which a main temperature sensor and a sub temperature sensor are mounted, and a working coil of the cooking appliance according to an embodiment of the present disclosure.
FIG. 8 is a cross-sectional view of the sensor supporter and the working coil according to an embodiment of the present disclosure.
FIG. 9 is a view illustrating a space in which a plurality of sub temperature sensors are disposed according to an embodiment of the present disclosure.
FIG. 10 is a view illustrating a state in which the plurality of sub temperature sensors are disposed in the space illustrated in FIG. 9.

### DETAILED DESCRIPTION OF THE EMBODIMENTS

Hereinafter, embodiments relating to the present disclosure will be described in detail with reference to the accompanying drawings. Furthermore, terms, such as a "module" ad a "unit", are used for convenience of description, and they do not have different meanings or functions in themselves.

Hereinafter, a cooking appliance and operating method thereof according to an embodiment of the present disclosure will be described. Hereinafter, "cooking appliance" may mean an induction heating type cooktop, but is not limited thereto.

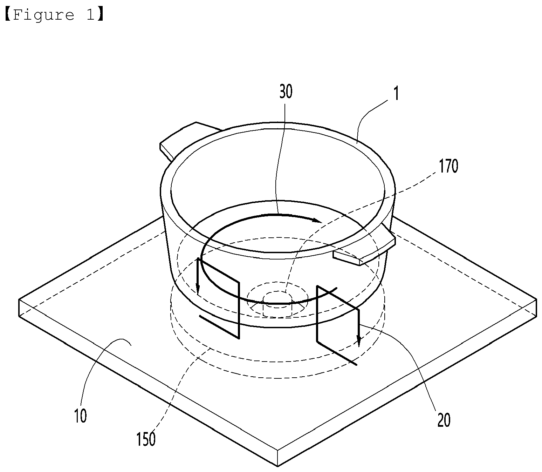

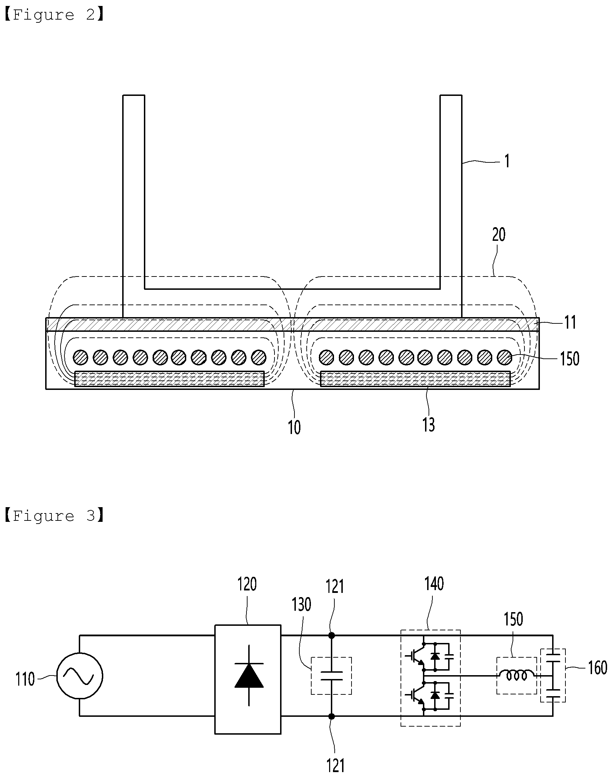

FIG. 1 is a perspective view illustrating a cooking appliance and a cooking container according to an embodiment of the present disclosure, and FIG. 2 is a cross-sectional view illustrating the cooking appliance and the cooking container according to an embodiment of the present disclosure.

A cooking container 1 may be disposed above the cooking appliance 10, and the cooking appliance 10 may heat a cooking container 1 disposed thereon.

First, a method for heating the cooking container 1 using the cooking appliance 10 will be described.

As illustrated in FIG. 1, the cooking appliance 10 may generate a magnetic field 20 so that at least a portion of the magnetic field 20 passes through the cooking container 1. Here, if an electrical resistance component is contained in a material of the cooking container 1, the magnetic field 20 may induce an eddy current 30 in the cooking container 1. Since the eddy current 30 generates heat in the cooking container 1 itself, and the heat is conducted or radiated up to the inside of the cooking container 1, contents of the cooking container 1 may be cooked.

When the material of the cooking container 1 does not contain the electrical resistance component, the eddy current 30 does not occur. Thus, in this case, the cooking appliance 10 may not heat the cooking container 1.

As a result, the cooking container 1 capable of being heated by the cooking appliance 10 may be a stainless steel vessel or a metal vessel such as an enamel or cast iron vessel.

Next, a method for generating the magnetic field 20 by the cooking appliance 10 will be described.

As illustrated in FIG. 2, the cooking appliance 10 may include at least one of an upper plate glass 11, a working coil 150, or a ferrite 13.

The upper plate glass 11 may support the cooking container 1. That is, the cooking container 1 may be placed on a top surface of the upper plate glass 11. A heating area in which the cooking container 1 is heated may be formed on the upper plate 11.

In addition, the upper plate glass 11 may be made of ceramic tempered glass obtained by synthesizing various mineral materials. Thus, the upper plate glass 11 may protect the cooking appliance 10 from an external impact.

In addition, the upper plate glass 11 may prevent foreign substances such as dust from being introduced into the cooking appliance 10.

The working coil 150 may be disposed below the upper plate glass 11. Current may or may not be supplied to the working coil 150 to generate the magnetic field 20. Specifically, the current may or may not flow through the working coil 150 according to on/off of an internal switching element of the cooking appliance 10.

When the current flows through the working coil 150, the magnetic field 20 may be generated, and the magnetic field 20 may generate the eddy current 30 by meeting the electrical resistance component contained in the cooking container 1. The eddy current may heat the cooking container 1, and thus, the contents of the cooking container 1 may be cooked.

In addition, heating power of the cooking appliance 10 may be adjusted according to an amount of current flowing through the working coil 150. As a specific example, as the current flowing through the working coil 150 increases, the magnetic field 20 may be generated more, and thus, since the magnetic field passing through the cooking container 1 increases, the heating power of the cooking appliance 10 may increase.

The ferrite 13 is a component for protecting an internal circuit of the cooking appliance 10. Specifically, the ferrite 13 serves as a shield to block an influence of the magnetic field 20 generated from the working coil 150 or an electromagnetic field generated from the outside on the internal circuit of the cooking appliance 10.

For this, the ferrite 13 may be made of a material having very high permeability. The ferrite 13 serves to induce the magnetic field introduced into the cooking appliance 10 to flow through the ferrite 13 without being radiated. The movement of the magnetic field 20 generated in the working coil 150 by the ferrite 13 may be as illustrated in FIG. 2.

The cooking appliance 10 may further include components other than the upper glass 11, the working coil 150, and the ferrite 13 described above. For example, the cooking appliance 10 may further include an insulator (not shown) disposed between the upper plate glass 11 and the working coil 150. That is, the cooking appliance according to the present disclosure is not limited to the cooking appliance 10 illustrated in FIG. 2.

FIG. 3 is a circuit diagram of the cooktop according to an embodiment of the present disclosure.

Since the circuit diagram of the cooking appliance 10 illustrated in FIG. 3 is merely illustrative for convenience of description, the embodiment of the present disclosure is not limited thereto.

Referring to FIG. 3, the induction heating type cooktop may include at least some or all of a power supply 110, a rectifier 120, a DC link capacitor 130, an inverter 140, a working coil 150, a resonance capacitor 160, and an SMPS 170.

The power supply 110 may receive external power. Power received from the outside to the power supply 110 may be alternation current (AC) power.

The power supply 110 may supply an AC voltage to the rectifier 120.

The rectifier 120 is an electrical device for converting alternating current into direct current. The rectifier 120 converts the AC voltage supplied through the power supply 110 into a DC voltage. The rectifier 120 may supply the converted voltage to both DC ends 121.

An output terminal of the rectifier 120 may be connected to both the DC ends 121. Each of both the ends 121 of the DC output through the rectifier 120 may be referred to as a DC link. A voltage measured at each of both the DC ends 121 is referred to as a DC link voltage.

A DC link capacitor 130 serves as a buffer between the power supply 110 and the inverter 140. Specifically, the DC link capacitor 130 is used to maintain the DC link voltage converted through the rectifier 120 to supply the DC link voltage to the inverter 140.

The inverter 140 serves to switch the voltage applied to the working coil 150 so that high-frequency current flows through the working coil 150. The inverter 140 drives the switching element constituted by insulated gate bipolar transistors (IGBTs) to allow high-frequency current to flow through the working coil 150, and thus, a high-frequency magnetic field is generated in the working coil 150.

In the working coil 150, current may or may not flow depending on whether the switching element is driven. When current flows through the working coil 150, magnetic fields are generated. The working coil 150 may heat an cooking appliance by generating the magnetic fields as the current flows.

One side of the working coil 150 is connected to a connection point of the switching element of the inverter 140, and the other side is connected to the resonance capacitor 160.

The switching element is driven by a driver (not shown), and a high-frequency voltage is applied to the working coil 150 while the switching element operates alternately by controlling a switching time output from the driver. In addition, since a turn on/off time of the switching element applied from the driver (not shown) is controlled in a manner that is gradually compensated, the voltage supplied to the working coil 150 is converted from a low voltage into a high voltage.

The resonance capacitor 160 may be a component to serve as a buffer. The resonance capacitor 160 controls a saturation voltage increasing rate during the turn-off of the switching element to affect an energy loss during the turn-off time.

The SMPS 170 (switching mode power supply) refers to a power supply that efficiently converts power according to a switching operation. The SMPS 170 converts a DC input voltage into a voltage that is in the form of a square wave and then obtains a controlled DC output voltage through a filter. The SMPS 170 may minimize an unnecessary loss by controlling a flow of the power using a switching processor.

In the case of the cooking appliance 10 expressed by the circuit diagram illustrated in FIG. 3, a resonance frequency is determined by an inductance value of the working coil 150 and a capacitance value of the resonance capacitor 160. Then, a resonance curve may be formed around the determined resonance frequency, and the resonance curve may represent output power of the cooking appliance 10 according to a frequency band.

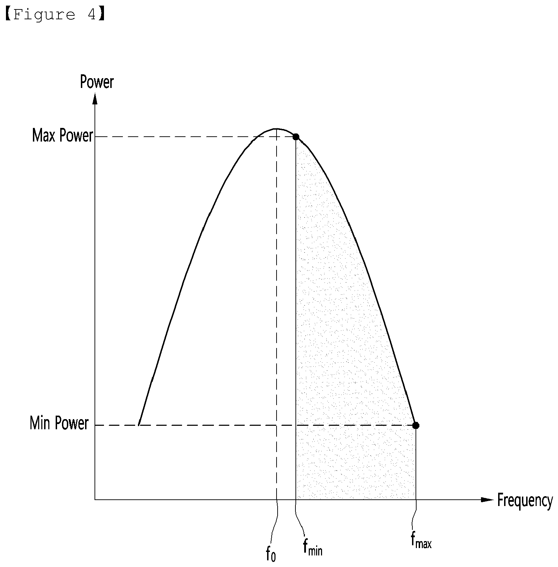

Next, FIG. 4 is a view illustrating output characteristics of the cooktop according to an embodiment of the present disclosure.

First, a Q factor (quality factor) may be a value representing sharpness of resonance in the resonance circuit. Therefore, in the case of the cooking appliance 10, the Q factor is determined by the inductance value of the working coil 150 included in the cooking appliance 10 and the capacitance value of the resonant capacitor 160. The resonance curve may be different depending on the Q factor. Thus, the cooking appliance 10 has different output characteristics according to the inductance value of the working coil 150 and the capacitance value of the resonant capacitor 160.

FIG. 4 illustrates an example of the resonance curve according to the Q factor. In general, the larger the Q factor, the sharper the shape of the curve, and the smaller the Q factor, the broader the shape of the curve.

A horizontal axis of the resonance curve may represent a frequency, and a vertical axis may represent output power. A frequency at which maximum power is output in the resonance curve is referred to as a resonance frequency f0.

In general, the cooking appliance 10 uses a frequency in a right region based on the resonance frequency f0 of the resonance curve. In addition, the cooking appliance 1 may have a minimum operating frequency and a maximum operating frequency, which are set in advance.

For example, the cooking appliance 10 may operate at a frequency corresponding to a range from the maximum operating frequency fmax to the minimum operating frequency fmin. That is, the operating frequency range of the cooking appliance 10 may be from the maximum operating frequency fmax to the minimum operating frequency fmin.

For example, the maximum operating frequency fmax may be an IGBT maximum switching frequency. The IGBT maximum switching frequency may mean a maximum driving frequency in consideration of a resistance voltage and capacity of the IGBT switching element. For example, the maximum operating frequency fmax may be 75 kHz.

The minimum operating frequency fmin may be about 20 kHz. In this case, since the cooking appliance 10 does not operate at an audible frequency (about 16 Hz to 20 kHz), noise of the cooking appliance 10 may be reduced.

Since setting values of the above-described maximum operating frequency fmax and minimum operating frequency fmin are only examples, the embodiment of the present disclosure is not limited thereto.

When receiving a heating command, the cooking appliance 10 may determine an operating frequency according to a heating power level set by the heating command. Specifically, the cooking appliance 10 may adjust the output power by decreasing in operating frequency as the set heating power level is higher and increasing in operating frequency as the set heating power level is lower. That is, when receiving the heating command, the cooking appliance 10 may perform a heating mode in which the cooking appliance operates in one of the operating frequency ranges according to the set heating power.

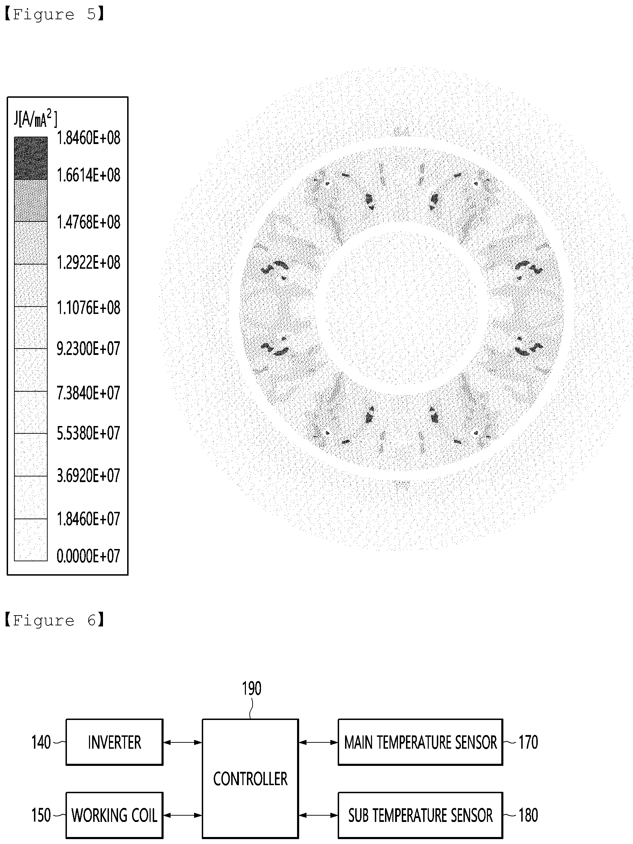

FIG. 5 is a view illustrating a current density of a bottom of the cooking container that is being heated by the cooking appliance according to an embodiment of the present disclosure.

Referring to FIG. 5, it is seen that a current density of a bottom surface of the cooking container 1 is formed non-uniformly. Specifically, it is seen that the current density is low in a center area and an outer circumferential area of the bottom surface of the cooking container 1, while a high current density is formed in an area therebetween, i.e., between the center area and the outer circumferential area.

Thus, when the cooking appliance is provided with only one temperature sensor, it takes a long time for heat to be transferred from another area to the area where the temperature sensor is disposed, which has a disadvantage of deteriorating accuracy of the temperature sensing and slow a response speed.

Thus, the cooking appliance according to an embodiment of the present disclosure is intended to be provided with the plurality of temperature sensors to be able to sense temperatures of various areas of a heating zone on which a current density is formed at various levels.

FIG. 6 is a control block diagram of the cooking appliance according to an embodiment of the present disclosure.

The cooking appliance 10 according to an embodiment of the present disclosure may include at least some or all of an inverter 140, a working coil 150, a main temperature sensor 170, a sub temperature sensor 180, and a controller 190.

The inverter 140 may supply current to the working coil 150. The inverter 140 may convert direct current power rectified by a rectifier 120 into alternating current power to supply the converted current power to the working coil 150. The inverter 140 may be provided in various shapes such as a half-bridge or full-bridge.

The working coil 150 may receive current from the inverter 140 to generate magnetic fields that pass through the cooking container 1.

Each of the main temperature sensor 170 and the sub temperature sensor 180 may detect a temperature. The main temperature sensor 170 and the sub temperature sensor 180 may be temperature sensors for directly or indirectly sensing the temperature of the cooking container 1.

The main temperature sensor 170 may be the same as the temperature sensor described in FIG. 1. The main temperature sensor 170 may be disposed at a center of the working coil 150. The main temperature sensor 170 may be disposed to be in direct or indirect contact with the upper plate 11. For example, the main temperature sensor 170 may be disposed to be in contact with a bottom surface of the upper plate 11 to sense the temperature of the upper plate 11.

The main temperature sensor 170 may calculate the temperature of the cooking container 1 through the upper plate 11. Specifically, since the heat of the cooking container 1 is transferred to the upper plate 11, the main temperature sensor 170 may indirectly calculate the temperature of the cooking container 1 by measuring the temperature of the upper plate 11.

Likewise, the sub temperature sensor 180 may calculate the temperature of the cooking container 1 by measuring the temperature of the upper plate 11.

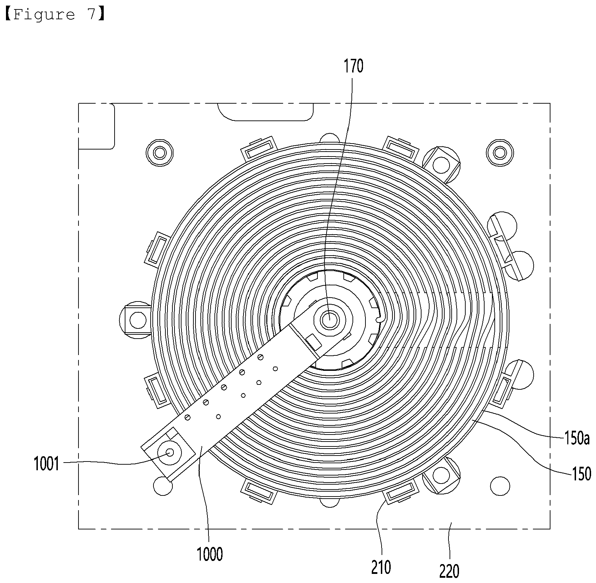

The sub temperature sensor 180 may be disposed on an upper portion of the working coil 150. This will be described in detail with reference to FIGS. 7 to 10.

The controller 190 may control each component provided in the cooktop 10 such as the inverter 140, the working coil 150, the main temperature sensor 170, and the sub temperature sensor 180.

As a specific example, the controller 190 may execute or end various algorithms based on the sensed result of at least one of the main temperature sensor 170 or the sub temperature sensor 180. For example, the controller 180 may execute or end an upper plate overheating prevention algorithm, an artificial intelligence cooking temperature control, a food type/amount estimation algorithm, etc., based on the sensed result of at least one of the main temperature sensor 170 and the sub temperature sensor 180.

To accurately execute the above-described algorithms, accurate temperature sensing may be required. Thus, as described above, the present disclosure may provide the cooking appliance 10 that further includes not only the main temperature sensor 170 but also at least one the sub temperature sensor 180.

The cooking appliance 10 according to an embodiment of the present disclosure may be provided with a sensor supporter 1000 on which the main temperature sensor 170 and the sub temperature sensor 180 are mounted, which will be described in detail below.

FIG. 7 is a view illustrating the sensor supporter, on which the main temperature sensor and the sub temperature sensor are mounted, and the working coil of the cooking appliance according to an embodiment of the present disclosure.

The working coil 150 may be wound around a working coil base 210. The working coil base 210 may guide a position at which the working coil 150 is wound and may fix the wound working coil 150. For this, a plurality of partition walls may be disposed on the working coil base 210. The partition walls may space each turn of the working coil 150 from each other.

The working coil base 210 may be fixed to an aluminum plate 220. For example, the working coil base 210 may be coupled to the aluminum plate 220 through a screw or the like. The aluminum plate 220 may support the working coil base 210.

The sensor supporter 1000 may be supported on at least one of the working coil base 210 or the aluminum plate 220. The sensor supporter 1000 may be fixed to at least one of the working coil base 210 or the aluminum plate 220.

In the present disclosure, the sensor supporter 1000 will be described assuming that the sensor supporter 1000 is fixed to each of the working coil base 210 and the aluminum plate 220. For example, a first fixing portion 1001 and a second fixing portion 1101 may be disposed on the sensor supporter 1000.

Referring to the example of FIG. 7, the first fixing portion 1001 may be a through-hole through which a screw or the like passes. A portion of the sensor supporter 1000 may be fixed to the aluminum plate 220 by the screw passing through the first fixing portion 1001.

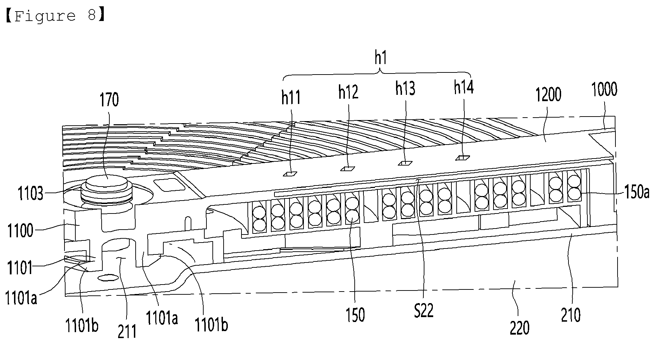

The second fixing portion 1101 will be described with reference to FIG. 8.

FIG. 8 is a cross-sectional view of the sensor supporter and the working coil according to an embodiment of the present disclosure.

A central hole 211 passing in the vertical direction may be defined in a center of the working coil base 210. The central hole 211 may be a passage through which a harness (not shown) connected to the main temperature sensor 170 passes. In addition, the central hole 211 may be a coupling space into which the second fixing portion 1101 is inserted. For example, the second fixing portion 1101 may be a pair of fitting portions 1101a with a space therebetween, and a protrusion 1101b may be disposed on each of both ends of each pair of fitting portions 110a. The pair of fitting portions 1101a may have elasticity due to the space defined therebetween, and thus, the pair of fitting portions 110a may be fixed by the protrusion 1101b after passing through the central hole 211. That is, the second fixing portion 1101 may be fixed to the working coil base 210 in a manner, in which the second fixing portion 1101 is forcibly inserted into the working coil base 210.

The sensor supporter 1000 may be supported on the working coil base 210 or the aluminum plate 220 by at least one of the first fixing portion 1001 or the second fixing portion 1101, which are described above.

The sensor supporter 1000 may be provided with a main mounting portion 1100 on which the main temperature sensor 170 is mounted and a sub mounting portion 1200 on which the sub temperature sensor 180 is mounted.

The main mounting portion 1100 may be disposed at the center of the working coil base 210. That is, the main mounting portion 1100 may be disposed to overlap the center of the working coil base 210 in the vertical direction. In addition, the main mounting unit 1100 may be disposed at the center of the working coil 150. That is, the main mounting portion 1100 may be disposed to overlap the center of the working coil 150 in the vertical direction. In summary, the main mounting portion 1100, the center of the working coil base 210, and the center of the working coil 150 may be disposed to overlap each other in the vertical direction.

The main mounting portion 1100 may be disposed above the second fixing portion 1101.

The main temperature sensor 170 may be disposed on the main mounting portion 1100, and the main temperature sensor 170 may be fixed by the sensor fixing portion 1103. The sensor fixing portion 1103 may be a circular rubber. The sensor fixing portion 1103 may allow the main temperature sensor 170 to be in close contact with the upper plate 11.

The sub mounting portion 1200 may be disposed between the main mounting portion 1100 and the first fixing portion 1001. The sub mounting portion 1200 may be disposed between the main mounting portion 1100 and an outer perimeter 50a of the working coil 150.

The sub mounting portion 1200 may be disposed above the working coil 150. The sub mounting portion 1200 may be disposed in a direction transverse to the direction in which the working coil 150 is wound. The sub mounting portion 1200 may be disposed in a direction perpendicular to the direction in which the working coil 150 is wound.

The sensor supporter 1000 may be disposed in an outward direction from the center of the working coil 150. In addition, the direction in which the sensor supporter 1000 is directed may not be limited. That is, the sensor supporter 1000 may be disposed in any direction of about 360 degrees, such as about 3 o'clock, about 6 o'clock, or about 12 o'clock, from the center of the working coil 150.

An opening hole h1 may be defined in a top surface of the sub mounting portion 1200 to allow the sub temperature sensor 180 to be in contact with the upper plate 11.

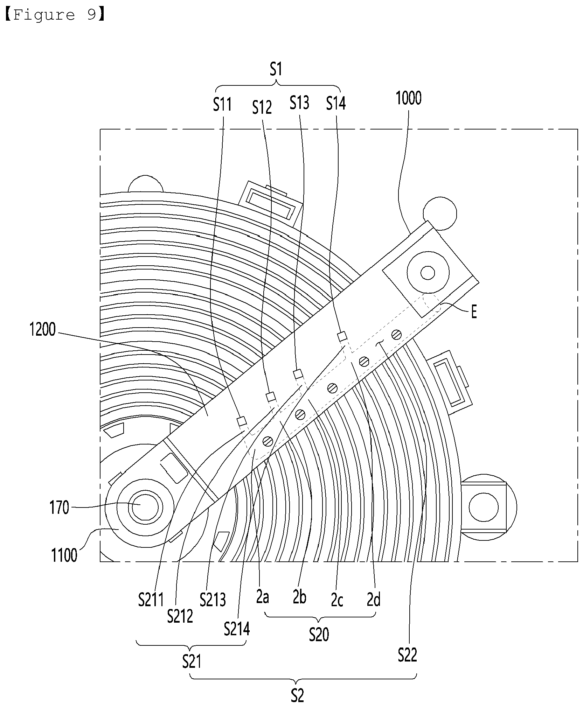

A sensor space S1 (see FIG. 9) in which the sub temperature sensor 180 is disposed and a harness space S2 through which a harness connected to the sub temperature sensor 180 passes may be defined in the sub mounting portion 1200. Here, the sensor space S1 may be in communication with the opening hole h1. Thus, the sub temperature sensor 180 disposed in the sensor space S1 may be in contact with the bottom surface of the upper plate 11 through the opening hole h1. In this respect, the opening hole h1 may be a portion of the sensor space S1.

One or more sub temperature sensors 180 may be provided in the cooking appliance 1. For example, the cooking appliance 1 may include a plurality of sub temperature sensors 180. As the number of sub temperature sensors 180 provided in the cooking appliance 1 increases, temperature estimation accuracy may be improved. In this specification, it is assumed that the cooking appliance 1 is provided with four sub temperature sensors 180, but this is only an example for convenience of explanation. That is, the number of sub temperature sensors 180 provided in the cooking appliance 1 may vary.

The number of opening holes h1 may be one or more. The opening hole h1 may be defined as large one in which all the sub temperature sensors 180 are disposed therein. Alternatively, the opening hole h1 may be defined to correspond to each of the plurality of sub temperature sensors 180. In this specification, it is assumed that the opening hole h1 is defined to correspond to each of the plurality of sub temperature sensors 180.

First to fourth opening holes h11, h12, h13, and h14 corresponding to the first to fourth sub temperature sensors 180, respectively, may be defined in the sub mounting portion 1200. Each of the first to fourth sub temperature sensors 180 may sense a temperature by being in contact with the bottom surface of the upper plate 11 through each of the first to fourth opening holes h11, h12, h13, and h14.

Each of the plurality of sub temperature sensors 180 may be disposed at different distances from the center of the working coil 150. Thus, there is an advantage in that the temperature distribution of the upper plate 11 is more accurately estimated in consideration of a magnetic field concentration area formed according to the spaced distance from the center of the working coil 150.

Like the plurality of sub temperature sensors 180, a plurality of sensor spaces S1 in which the plurality of sub temperature sensors 180 are disposed may be defined in the sub mounting portion 1200.

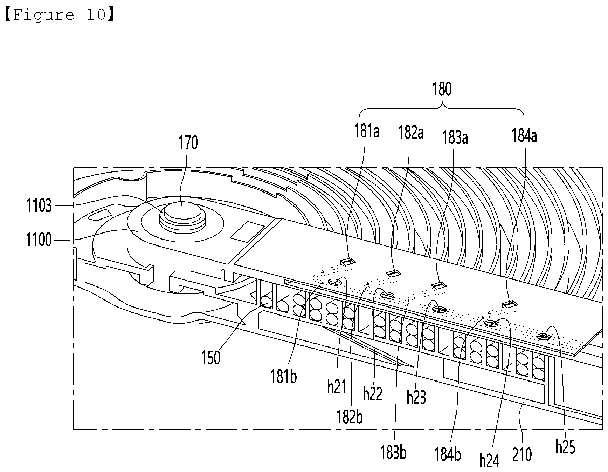

FIG. 9 is a view illustrating a space in which the plurality of sub temperature sensors are disposed according to an embodiment of the present disclosure, and FIG. 10 is a view illustrating a state in which the plurality of sub temperature sensors are disposed in the space illustrated in FIG. 9.

The sub mounting portion 1200 may have first to fourth sensor spaces S11, S12, S13, and S14 in which the first to fourth sub temperature sensors 181a, 182a, 183a, and 184a are disposed, respectively.

That is, the plurality of sensor spaces S1 may include first to fourth sensor spaces S11, S12, S13, and S14. Each of the plurality of sensor spaces S1 may have a different spaced distance from the main mounting unit 1100. That is, each of the plurality of sensor spaces S1 may have a different distance from the center of the working coil 150. For example, the first sensor space S11 may be defined at a first distance from the center of the working coil 150, the second sensor space S12 may be defined at a second distance greater than the first distance from the center of the working coil 150, the third sensor space S13 may be defined at a third distance greater than the second distance from the center of the working coil 150, and the fourth sensor space S14 may be defined at a fourth distance greater than the third distance from the center of the working coil 150. Thus, the first sub temperature sensor 181a may sense a temperature of an area of the upper plate 11 that is the first distance away from the center of the working coil 150, the second sub temperature sensor 182a may sense a temperature of an area of the upper plate 11 that is the second distance away from the center of the working coil 150, the third sub-temperature sensor 183a may sense a temperature of an area of the upper plate 11 that is the third distance away from the center of the working coil 150, and the fourth sub temperature sensor 184a may sense a temperature of an area of the upper plate 11 that is the fourth distance away from the center of the working coil 150.

The plurality of sensor spaces S11, S12, S13, and S14 may be disposed in a straight line. That is, the plurality of sensor spaces S11, S12, S13, and S14 may be disposed in a row.

A harness space S2 may be further defined in the sub mounting portion 1200 in which harnesses 181b, 182b, 183b, and 184b connected to the sub temperature sensor 180 are disposed. The harnesses 181b, 182b, 183b, and 184b may include a first harness 181b connected to the first sub temperature sensor 181a, a second harness 182b connected to the second sub temperature sensor 182a, a third harness 183b connected to the third sub temperature sensor 183a, and a fourth harness 184b connected to the fourth sub temperature sensor 184a.

The harnesses may be disposed inside the sub mounting portion 1200 of the harness space S2. The harness space S2 may be connected to the sensor space S1. The harness space S2 may be a passage through which the harness connected to the sub temperature sensor 180 passes.

The harness space S2 may have a bent portion S20 that is bent at least once. The bent portion S20 may be a structure for fixing the sub temperature sensor 180. Specifically, if the harness space S2 is provided in a straight line, when an external impact such as shaking occurs in the cooking appliance 1, the harness 181b, 182b, 183b, and 184b be shaken together with the sub temperature sensor 180. However, even if the external impact occurs in the cooking appliance 1, the bent portion S20 may minimize a clearance of each of the harnesses 181b, 182b, 183b, and 184b, and the shaking of the sub temperature sensor 180 may also be minimized.

Particularly, the bent portion S20 may be bent toward an opposite side of a harness outlet E. Referring to FIG. 9, the bent portion S20 may be convexly bent toward the center of the working coil 150. The harness outlet E may be a hole defined in the sensor supporter 1000 so that the other end of the harness of which one end is connected to the sub temperature sensor 180, is connected to a PCB (not shown), etc., and when the bent portion S20 is bent to an opposite side of the harness outlet E, an effect of fixing the sub temperature sensor 180 may be improved.

The harness space S2 may be constituted by a sensor connection portion S21 and an outlet connection portion S22.

The sensor connection portion S21 may be a space in which the harness connected to each of the sub temperature sensors 180 disposed in the sensor space S1 is disposed, and the outlet connection portion S22 may be a space in which the harness disposed in the sensor connection portion S21 is disposed may be a space defined to extend up to the harness outlet E.

The sensor connection portion 21 and the outlet connection portion S22 may be distinguished by the bent portion S20. The bent portion S20 may have a bent structure for fixing the sub temperature sensor 180 and may be a portion of each of the sensor connection portion 21 and the outlet connection portion S22.

In the present specification, the bent portion S20 will be described assuming that the bent portion S20 is a portion of the outlet connection portion S22. First to fourth bent portions 2a, 2b, 2c, and 2d may be disposed on the outlet connection portion S22, and first to fourth bent portions 2a, 2b, 2c, and 2d may be structures for fixing the first to fourth sub temperature sensors 181a, 182a, 183a, and 184a, respectively.

The first bent portion 2a may be connected to the first sensor connection portion S211, the second bent portion 2b may be connected to the second sensor connection portion S212, and the third bent portion 2c may be connected to the third sensor connection portion S213, and the fourth bent portion 2d may be connected to the fourth sensor connection portion S214.

The sensor connection portion S21 may include a first sensor connection portion S211 connecting the first sensor space S11 to the first bent portion 2a, a second sensor connection portion S212 connecting the second sensor space S12 to the second bent portion 2b, a third sensor connection portion S213 connecting the third sensor space S13 to the third bent portion 2c, and a fourth sensor connection portion S214 connecting the fourth sensor space S14 to the fourth bent portion 2d.

The harnesses 181b, 182b, 183b, and 184b respectively connected to the first to fourth sub temperature sensors 181a, 182a, 183a, and 184a may be gathered to the outlet connection portion S22 via the first to fourth sensor connection portions S211, S212, S213, and S214. The harnesses 181b, 182b, 183b, and 184b gathered to the outlet connection portion S22 may pass through the harness outlet E.

According to an embodiment, at least one discharge hole h21, h22, h23, h24, or h25 may be defined in the top surface of the sub mounting portion 1200. Discharge holes h21, h22, h23, h24, and h25 may be defined above the outlet connection portion S22. The discharge holes h21, h22, h23, h24, and h25 and the outlet connection portion S22 may be connected to each other. The discharge holes h21, h22, h23, h24, and h25 may be holes through which heat generated in the harnesses 181b, 182b, 183b, and 184b is discharged out of the sub mounting portion 1200. Thus, a limitation of damaging the harnesses 181b, 182b, 183b, and 184b due to an increase in temperature of the outlet connection portion S22 may be minimized.

Thermal grease may be filled in the sensor space S1. The thermal grease may be a fluid material that transfers heat. The thermal grease may protect the sub temperature sensor 180 from an external impact, etc. in the sensor space S1. In addition, the thermal grease may transfer the heat of the upper plate 11 to the sub temperature sensor 180 to more improve the sensing speed with respect to the temperature of the bottom surface of the upper plate 11 through the sub temperature sensor 180.

According to the embodiment of the present disclosure, there may be the advantage of being able to quickly sense the temperature of the entire heating zone from the center area of the heating zone to the outer area through the main temperature sensor and sub temperature sensor, which are mounted on the sensor supporter.

According to the embodiment of the present disclosure, the temperature of the entire heating zone may be quickly sensed, which has the advantage of improving the operation accuracy, reliability, and stability of various algorithms according to the temperature.

According to the embodiment of the present disclosure, the plurality of sub temperature sensors may be mounted at the different distances from the center of the working coil to provide the advantage of being able to more accurately recognize the temperature distribution of the heating zone according to the magnetic field distribution.

According to the embodiment of the present disclosure, there may be the advantage in that the stable installation is possible, such as minimizing the clearance of the sub temperature sensor through the design of the harness space.

The above description is merely illustrative of the technical idea of the present disclosure, and various modifications and changes may be made thereto by those skilled in the art without departing from the essential characteristics of the present disclosure.

Therefore, the embodiments of the present disclosure are not intended to limit the present disclosure but to illustrate the technical idea of the present disclosure, and the present disclosure is not limited by these embodiments.

The scope of protection of the present disclosure should be interpreted by the appending claims, and all technical ideas within the scope of equivalents should be construed as falling within the scope of the present disclosure.

## Claims

1. A cooking appliance comprising:
an upper plate (11) on which an object to be heated is disposed;
a working coil (150) configured to generate magnetic fields for heating the object to be heated;
a main temperature sensor (170) configured to sense a temperature of the upper plate (11);
a sub temperature sensor (180) configured to sense a temperature of the upper plate (11); and
a sensor support (1000) provided with a main mounting portion (1100), on which the main temperature sensor (170) is mounted, and a sub mounting portion (1200), on which the sub temperature sensor (180) is mounted,
wherein the sensor support (1000) is disposed to be elongated outward from a center of the working coil (150).

2. The cooking appliance according to claim 1, wherein the main mounting portion (1100) is disposed at the center of the working coil (150).

3. The cooking appliance of claim 1 or 2, wherein the sub mounting portion (1200) is disposed above the working coil (150).

4. The cooking appliance according to any one of the preceding claims, wherein the sub mounting portion (1200) is disposed between the main mounting portion (1100) and an outer circumference of the working coil (150).

5. The cooking appliance of any one of the preceding claims, wherein an opening hole (h1) is defined in a top surcace of the sub mounting portion (1200) to allow the sub temperature sensor (180) to be in contact with the upper plate (11).

6. The cooking appliance according to any one of the preceding claims, wherein the sub temperature sensor (180) is provided in plurality.

7. The cooking appliance according to claim 6, wherein a plurality of sensor spaces (S11, S12, S13, S14), in which the plurality of sub temperature sensors (181a, 182a, 183a, 184b) are disposed, are defined in the sub mounting portion (1200).

8. The cooking appliance according to claim 7, wherein each of the plurality of sensor spaces (S11, S12, S13, S14) has a different spaced distance from the main mounting portion (1100).

9. The cooking appliance according to claim 8, wherein the plurality of sensor spaces (S11, S12, S13, S14) are disposed in a straight line.

10. The cooking appliance according to any one of the preceding claims, wherein a harness space (S2), in which a harness connected to the sub temperature sensor (180) is disposed, is defined in the sub mounting portion (1200).

11. The cooking appliance according to claim 10, wherein the harness space (S2) has a bent portion (S20) that is bent at least one time.

12. The cooking appliance according to claim 11, wherein the bent portion is bent convexly in a direction of the center of the working coil (150).

13. The cooking appliance according to any of claims 10 to 12, wherein the harness space (S2) comprises a sensor connection portion (S21) and an outlet connection portion (S22).

14. The cooking appliance according to claim 13, wherein the sensor connection portion (S21) is a space in which the harness connected to each of the sub temperature sensors (180) disposed in the sensor space (S1) is disposed, and the outlet connection portion (S22) is a space in which the harness disposed in the sensor connection portion (S21) is disposed to extend up to a harness outlet (E).

15. The cooking appliance according to any one of claims 7 to 12, when depending on claim 7, wherein thermal grease is filled into the sensor spaces (S11, S12, S13, S14).
